# EUROPÄISCHE PATENTSCHRIFT

(11) **EP 2 143 600 B1**
(45) Veröffentlichungstag und Bekanntmachung des Hinweises auf die Patenterteilung: **02.03.2011**
(21) Anmeldenummer: 09008119.1
(22) Anmeldetag: 20.06.2009
(51) Int. Cl.: B60R 25/04, G07C 9/00, H01H 27/06, B66F 9/20, B66F 17/00, H01H 3/20

(54) **Einsteckschaltschloss für ein Flurförderzeug**
Plug-in switch lock for an industrial truck
Serrure de commutation emboîtée pour un chariot de manutention

(30) Priorität: 11.07.2008 DE 102008032767
(43) Veröffentlichungstag der Anmeldung: 13.01.2010
(73) Patentinhaber: Jungheinrich Aktiengesellschaft, 22047 Hamburg (DE)
(72) Erfinder: Ludwig, Jens, 22305 Hamburg (DE)
(74) Vertreter: Hauck Patent- und Rechtsanwälte

(56) Entgegenhaltungen:
- EP-A1- 0 789 120
- US-A1- 2001 011 942
- US-A1- 2004 025 549

## Beschreibung

Die Erfindung bezieht sich auf ein Einsteckschaltschloss für ein Flurförderzeug nach dem Patentanspruch 1.

Einsteckschaltschlösser für Flurförderzeuge sind allgemein bekannt. Sie dienen dazu, das Fahrzeug oder Teile davon in Betriebsstellung zu bringen, wenn mit Hilfe des Einsteckschlosses über den damit betätigten Schalter ein Schaltkreis geschlossen wird, der für das in-Gang-setzen einzelner Betriebsfunktionen erforderlich ist. Zumeist wird ein Steckschlüssel nach dem Einstecken in das Einsteckschloss um einen bestimmten Winkel gedreht, um den Schalter zu betätigen.

Es ist ferner bekannt, ein derartiges Einsteckschaltschloss mit einer zweiten Schaltstufe auszurüsten. Diese zweite Schaltstufe dient einer sogenannten Notbergung. Wird z.B. aus Gründen einer Störung des Fahrzeugs oder einer Notabschaltung eine Haltebremse aktiviert, hält diese das Fahrzeug an Ort und Stelle. Damit das Fahrzeug abgeschleppt oder von Hand bewegt werden kann, ist erforderlich, die Haltebremse wieder zu lösen. Es versteht sich, dass dieser Zustand bei einer üblichen Bedienung des Fahrzeugs nicht unbewusst eingeschaltet werden darf.

Das Document US-A-2004/0025549 offenbart ein System gemäß dem Oberbegriff des Anspruchs 1.

Daher liegt der Erfindung die Aufgabe zugrunde, ein Einsteckschaltschloss für ein Flurförderzeug zu schaffen, mit dem die zweite Schaltstufe nur bei bewusster Betätigung des Schlüssels erreicht wird.

Diese Aufgabe wird durch die Merkmale des Anspruchs 1 gelöst.

Bei dem erfindungsgemäßen Einsteckschaltschloss weist die Handhabe des Schlüssels einen Sperrabschnitt auf, der zwischen einer Sperrposition und einer Freigabeposition verschiebbar ist. Er ist von einem Betätigungsabschnitt, der ebenfalls an der Handhabe des Schlüssels gelagert ist, betätigbar. Das Einsteckschaltschloss weist an der der Handhabe zugekehrten Seite einen Sperrvorsprung auf, der eine Verdrehung des Schlüssels in die zweite Schaltstufe blockiert, wenn der Sperrabschnitt in der Sperrposition ist. In der Freigabeposition des Sperrabschnitts kann hingegen der Schlüssel in die zweite Schaltstufe verdreht werden.

Bei der Betätigung des Schlüssels im erfindungsgemäßen Einsteckschaltschloss muss der Benutzer bewusst den Sperrabschnitt betätigen, um den Schlüssel in die zweite Schaltstufe zu drehen. Es kann daher bei der Erfindung nicht geschehen, dass der Bediener eines Flurförderzeugs unbewusst den Schlüssel in die zweite Schaltstufe bewegt.

Nach einer Ausgestaltung der Erfindung ist der Sperrabschnitt durch eine Feder in die Sperrposition vorgespannt. Dadurch ist sichergestellt, dass in einer Stellung des Schlüssels außerhalb der zweiten Schaltstufe der Sperrabschnitt automatisch in die Sperrstellung gelangt.

Nach einer Ausgestaltung der Erfindung ist der Sperrabschnitt im Bereich einer dem Schloss zugekehrten Ecke der Handhabe ausgebildet. Hierbei wird davon ausgegangen, dass die Handhabe einen sich quer zum Schacht erstreckenden Abschnitt aufweist, der z.B. annähernd länglich rechteckig ist. Der Vorsprung an dem Schloss wirkt mit dem Sperrabschnitt zusammen, wenn dieser in der Sperrposition ist. Wird der Sperrabschnitt hingegen verstellt, kann der Schlüssel am Vorsprung vorbei in die zweite Schaltstellung verdreht werden.

Es sind verschiedene Möglichkeiten denkbar, den Sperrabschnitt zu konfigurieren und zu lagern. Eine besteht nach einer Ausgestaltung der Erfindung darin, den Sperrabschnitt als Schieber in der Handhabe zu lagern. Der Schieber kann in einem flachen Hohlraum der Handhabe beweglich gelagert sein und über einen länglichen Schlitz in der Handhabe von dem Betätigungsabschnitt verschoben werden.

Nach einer anderen Ausgestaltung der Erfindung ist der Vorsprung so ausgebildet, dass er in der zweiten Schaltstufe den Sperrabschnitt in der Freigabestellung hält. Wird der Schlüssel aus der zweiten in die neutrale Stellung oder in die erste Schaltstellung zurückgedreht, gelangt der Sperrabschnitt aufgrund der Federwirkung automatisch wieder in die Sperrstellung.

Ein Ausführungsbeispiel der Erfindung wird nachfolgend anhand von Zeichnungen näher erläutert.
- Fign. 1 - 3: zeigen schematisch ein Einsteck-Zweistufenschaltschloss von oben und einen Einsteckschlüssel in drei unterschiedlichen Schaltstellungen.
- Fig. 4: zeigt schematisch die Seitenansicht eines erfindungsgemäßen Einsteckschaltschlosses.
- Fign. 5 u. 6: zeigen die Seitenansicht eines Einsteckschlüssels für das Schaltschloss nach Figur 4 in unterschiedlichen Positionen eines Sperrabschnitts.

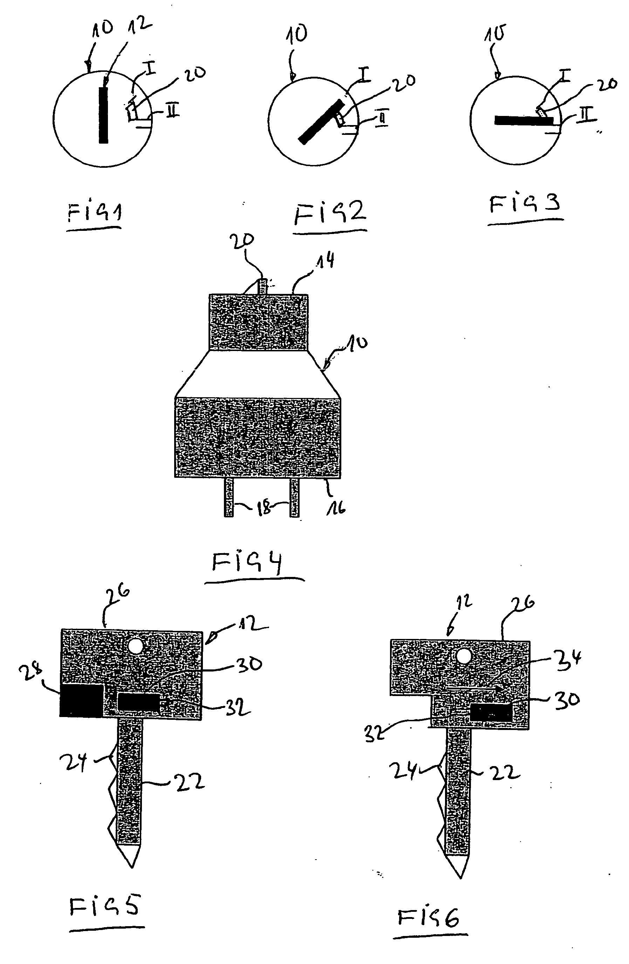

Ein Einsteckschaltschloss 10 in den Figuren 1 - 3 ist mit einem Einsteckschlüssel 12 versehen, der im Schloss 10 verdreht werden kann, um unterschiedliche Funktionen zu betätigen. Man erkennt in den Figuren 1 - 3 eine neutrale Stellung gemäß Figur 1 und zwei Schaltstellungen I und II. Die Schaltstellungen I und II betätigen unterschiedliche Funktionen. So wird in der Schaltstellung I der Betrieb des nicht gezeigten Flurförderzeugs, in den das Einsteckschaltschloss 10 eingebaut ist, in Bereitschaftsstellung gebracht. In der Schaltstufe II wird der Bremskreis für eine Handbremse, die z.B. eine Parkbremse oder eine Notstoppbremse ist, so betätigt, dass die Bremse in die Freigabestellung verstellt wird. Dies ist z.B. erforderlich, wenn das Fahrzeug nach einem Notstopp bewegt werden soll.

In Figur 4 ist das Einsteckschaltschloss 10 in Seitenansicht gezeigt. Es weist eine Außenseite oder Oberseite 14 auf und eine Unterseite 16, von der Schaltkontakte 18 nach unten stehen. An der Oberseite ist ein Sperrvorsprung 20 angeordnet. Wie sich aus den Figuren 1 - 3 ergibt, befindet sich der Sperrvorsprung 20 zwischen den Schaltstufen I und II.

Der zum Einsteckschaltschloss 10 gehörende Schlüssel ist vergrößert in den Figuren 5 und 6 zu erkennen. Er weist einen Schaft 22 mit entsprechender Kodierung 24 auf sowie eine im Umriss annähernd rechteckige Handhabe 26 an einem Ende des Schaftes 22. Die Handhabe 26 weist einen in der Ebene der flachen Handhabe 26 liegenden nicht gezeigten Hohlraum auf, der einen Sperrschieber 28 aufnimmt, der die dem Schaft 22 zugekehrte Ecke ausfüllt. Der Sperrschieber 28 ist von einer nicht gezeigten Feder in die in Figur 5 gezeigte Sperrstellung vorgespannt. Der Sperrschieber 28 wird von einem Betätigungsabschnitt 30 an der in den Figuren 5 und 6 sichtbaren Seite der Handhabe 26 betätigt. Zu diesem Zweck weist die Handhabe einen Schlitz 32 auf, über den der Betätigungsabschnitt 30 mit dem Sperrschieber 28 verbunden ist. Wird der Betätigungsabschnitt 30, wie in Figur 6 gezeigt, gemäß Pfeil 34 nach rechts bewegt, wird der Sperrschieber 28 in das Innere der Handhabe 26 hineingeschoben, und die linke untere Ecke wird frei.

Der Sperrvorsprung 20 ist auf der Oberseite 14 so angeordnet, dass der Sperrabschnitt 28 eine Verdrehung des Schlüssels 12 von Schaltstufe I in Schaltstufe II blockiert, weil der Sperrabschnitt 28 gegen den Vorsprung 20 stößt. Wird hingegen der Sperrschieber 28 gemäß Figur 6 zurückgezogen kann der Schlüssel von der Schaltstufe I in die Schaltstufe II verdreht werden.

Der Vorsprung 20 ist außerdem so ausgeführt, dass er in der Schaltstufe II den Sperrschieber 28 weiter in der Freigabestellung gemäß Figur 6 hält. Wird hingegen der Schlüssel wieder zurück in die Schaltstufe I oder in die Neutralstellung gemäß Figur 1 verstellt, bewegt die nicht gezeigte Feder den Sperrschieber 28 automatisch in die in Figur 5 gezeigte Sperrstellung zurück.

## Patentansprüche

1. Einsteckschaltschloss und Schlüssel für ein Flurförderzeug zum Schalten von Funktionen des Flurförderzeugs in zwei Schaltstufen, welche durch zwei Drehstellungen eines Steckschlüssels im Einsteckschloss definiert sind, wobei der Schlüssel einen einen Schlüsselcode enthaltenden Schaft und eine Handhabe aufweist, **dadurch gekennzeichnet, dass** die Handhabe (26) einen Sperrabschnitt (28) aufweist, der zwischen einer Sperrposition und einer Freigabeposition verschiebbar gelagert und von einem Betätigungsabschnitt (30) betätigbar ist, das Einsteckschloss (10) an der der Handhabe (26) zugekehrten Seite einen Sperrvorsprung (20) aufweist, der eine Verdrehung des Schlüssels (12) in die zweite Schaltstufe II blockiert, wenn der Sperrabschnitt (28) in der Sperrposition ist und der eine Verdrehung des Schlüssels (12) in die zweite Schaltstufe II zulässt, wenn der Sperrabschnitt (28) in der Freigabestellung ist.

2. Einsteckschaltschloss nach Anspruch 1, **dadurch gekennzeichnet, dass** der Sperrabschnitt (28) durch eine Feder in die Sperrposition vorgespannt ist.

3. Einsteckschaltschloss nach Anspruch 1 oder 2, **dadurch gekennzeichnet, dass** der Sperrabschnitt (28) im Bereich einer dem Schloss (10) zugekehrten Ecke der Handhabe (26) ausgebildet ist.

4. Einsteckschaltschloss nach einem der Ansprüche 1 bis 3, **dadurch gekennzeichnet, dass** der Sperrabschnitt (28) als Schieber in der Handhabe (26) gelagert ist.

5. Einsteckschaltschloss nach Anspruch 4, **dadurch gekennzeichnet, dass** der Betätigungsabschnitt (30) von einer Außenseite der Handhabe (26) über einen länglichen Schlitz (32) in der Handhabe (26) mit dem Schieber verbunden ist.

6. Einsteckschaltschloss nach einem der Ansprüche 2 bis 5, **dadurch gekennzeichnet, dass** der Vorsprung (20) so ausgebildet ist, dass er in der zweiten Schaltstufe den Sperrabschnitt (28) in der Freigabestellung hält.

## Claims

1. Plug-in switch lock and key for an industrial truck for switching functions of the industrial truck in two regulating steps which are defined by two rotational positions of a plug-in key in the plug-in lock, wherein the key has a shaft containing a key code and a handle, **characterised in that** the handle (28) features a blocking portion (28) which is movably mounted between a blocking position and a releasing position and actuable by an actuation portion (30), the plug-in lock (10) has a blocking projection (20) on the side facing the handle (26), which blocks rotation of the key (12) into the second regulating step II when the blocking portion (28) is in the blocking position, and which permits rotation of the key (12) into the second regulating step II when the blocking portion is in the releasing position.

2. Plug-in switch lock according to claim 1, **characterised in that** the blocking portion (28) is biased into the blocking position by a spring.

3. Plug-in switch lock according to claim 1 or 2, **characterised in that** the blocking portion (28) is formed in the region of a corner of the handle (26) facing the lock (10).

4. Plug-in switch lock according to any one of claims 1 to 3, **characterised in that** the blocking portion (28) is mounted as a slider in the handle (26).

5. Plug-in switch lock according to claim 4, **characterised in that** the actuation portion (30) is connected to the slider from out an outer side of the handle (26) via a longitudinal slot (32) in the handle (26).

6. Plug-in switch lock according to any one of claims 2 to 5, **characterised in that** the projection (20) is formed such that it keeps the blocking portion (28) in the releasing position in the second regulating step.

## Revendications

1. Serrure de commutation emboîtée et clé pour un chariot de manutention pour commuter des fonctions du chariot de manutention vers deux crans de marche qui sont définis par deux positions de rotation d'une clé enfichable dans la serrure emboîtée, la clé ayant une tige qui contient un code de clé et une poignée, **caractérisée en ce que** la poignée (28) présente une partie de blocage (28) qui est montée de façon mobile entre une position de blocage et une position de déblocage et qui est actionnable par une partie de manoeuvre (30), la serrure emboîtée (10) a une saillie de blocage (20) sur le côté tourné vers la poignée (26), qui bloque la rotation de la clé (12) vers le deuxième cran de marche II quand la partie de blocage (28) est dans la position de blocage, et qui permet la rotation de la clé (12) vers le deuxième cran de marche II quand la partie de blocage (28) est dans la position de déblocage.

2. Serrure de commutation emboîtée selon la revendication 1, **caractérisée en ce que** la partie de blocage (28) est précontrainte vers la position de blocage par un ressort.

3. Serrure de commutation emboîtée selon la revendication 1 or 2, **caractérisée en ce que** la partie de blocage (28) est formée dans la région d'un coin de la poignée (26) tourné vers la serrure (10).

4. Serrure de commutation emboîtée selon l'une quelconque des revendications 1 à 3, **caractérisée en ce que** la partie de blocage (28) est montée comme un coulisseau dans la poignée (26).

5. Serrure de commutation emboîtée selon la revendication 4, **caractérisée en ce que** la partie de manoeuvre (30) est reliée au coulisseau à partir d'un côté extérieur de la poignée (26) via une fente longitudinale (32) dans la poignée (26).

6. Serrure de commutation emboîtée selon l'une quelconque des revendications 2 à 5, **caractérisée en ce que** la saillie (20) est formée tellement qu'elle tient la partie de blocage (28) dans la position de déblocage dans le deuxième cran de marche.
